# EUROPÄISCHE PATENTSCHRIFT

(11) **EP 1 178 345 B1**
(45) Veröffentlichungstag und Bekanntmachung des Hinweises auf die Patenterteilung: **28.09.2005**
(21) Anmeldenummer: 01117981.9
(22) Anmeldetag: 25.07.2001
(51) Int. Cl.: G02B 21/00, G01J 3/32

(54) **Spektroskopische Anordnung in einem konfokalen Mikroskop**
Spectroscopical device in a confocal microscope
Dispositif de spectrométrie dans une microscope confocal

(30) Priorität: 02.08.2000 DE 10038049
(43) Veröffentlichungstag der Anmeldung: 06.02.2002
(73) Patentinhaber: Leica Microsystems Heidelberg GmbH, 68165 Mannheim (DE)
(72) Erfinder: Knebel, Werner, Dr., 76709 Kronau (DE)
(74) Vertreter: Naumann, Ulrich

(56) Entgegenhaltungen:
- EP-A- 0 548 830
- DE-A- 4 330 347
- DE-A- 19 835 072
- DE-A- 19 906 757
- US-A- 5 192 980
- US-A- 5 329 352

## Beschreibung

Die vorliegende Erfindung betrifft ein Konfokales Rastermikroskop nach dem Oberbegriff des Patentanspruchs 1.

Anordnungen der gattungsbildenden Art sind aus der DE 43 30 347, der DE 199 02 625 und der DE 199 06 757 bekannt. Diese Anordnungen werden vorzugsweise im Strahlengang konfokaler Laserscanning-Mikroskope eingesetzt. Hierbei wird ein das Detektionspinhole passierender Lichtstrahl mit einem Mittel zur spektralen Zerlegung spektral aufgefächert. Ein Teil des spektral aufgefächerten Lichtstrahls kann dann eine erste variabel angeordnete Spiegelblendenanordnung passieren. Der entsprechende spektrale Bereich wird dann von einem Detektor detektiert. Der Anteil des aufgefächerten Lichtstrahls, der auf die erste Spiegelblendenanordnung auftrifft, wird an ihr zu einer weiteren Spiegelblendenanordnung reflektiert. Auch an der weiteren Spiegelblendenanordnung kann ein Teil des an der ersten Spiegelblendenanordnung reflektierten spektral aufgefächerten Lichtstrahls passieren, der mit einem weiteren Detektor detektiert wird. Der verbleibende Teil wird mit der weiteren Spiegelblendeneinrichtung zu einem dritten Detektor reflektiert, dem gegebenenfalls eine weitere Spiegelblendenanordnung vorgeordnet ist.

Die bekannten optischen Anordnungen verwenden zur Detektion verschiedener Spektralbereiche mehrere Detektionskanäle. Jeder Detektionskanal ist üblicherweise mit einem eigenen Detektor ausgerüstet, was mit zum Teil erheblichen Kosten verbunden ist. Mit den bekannten optischen Anordnungen ist es ferner möglich, simultan mehrere Spektralbereiche zu detektieren, jedoch ist eine Detektion zahlreicher schmalbandiger Spektralbereiche mit den bekannten Anordnungen simultan nicht ohne weiteres möglich. Insbesondere wenn der gesamte Spektralbereich von beispielsweise 500 nm bis 800 nm in 5 nm-Schritten zu detektieren ist, ist eine mechanische Verstellung der variabel angeordneten Spiegelblenden erforderlich, was relativ viel Zeit in Anspruch nimmt.

Der vorliegenden Erfindung liegt daher die Aufgabe zugrunde, eine optische Anordnung der gattungsbildenden Art anzugeben und weiterzubilden, die von einem zu detektierenden spektralen Bereich mehrere schmalbandige spektrale Bereiche möglichst lückenlos und in variabel einstellbaren Schritten abtasten bzw. detektieren kann. Weiterhin sollte eine schnelle und variable spektrale Detektion möglich sein, die gleichzeitig kostengünstig realisierbar ist.

Das erfindungsgemäße Verfahren der gattungsbildenden Art löst die voranstehende Aufgabe durch die Merkmale des Patentanspruchs 1. Danach sind zur Beeinflussung des zu detektierenden spektralen Bereichs der spektral zerlegte Lichtstrahl und die Detektionsvorrichtung relativ zueinander in ihrer Position veränderbar.

Erfindungsgemäß ist zunächst erkannt worden, dass eine schnelle und variable spektrale Detektion durch eine relative Positionsänderung erzielt werden kann, und zwar ohne jedesmal mindestens eine Spiegelblende mechanisch zu bewegen. Durch diese relative Positionsänderung ist es in vorteilhafter Weise möglich, den spektralen Detektionsbereich sehr viel schneller einzustellen, als das mit einer Spektralbereichsänderung durch die Mittel zum Selektieren des vorgebbaren Bereichs möglich ist, wodurch die Detektionszeit reduziert wird. Beispielsweise ist es insbesondere bei der Selektion eines schmalbandigen spektralen Detektionsbereichs von 5 nm möglich, aufgrund der relativen Positionsänderung einen ausgedehnten Spektralbereich mit diesem eingestellten schmalbandigen Spektralbereich in Schritten von je 5 nm zu detektieren.

In einer bevorzugten Ausführungsform umfasst die Detektionsvorrichtung nur einen Detektor. Bei diesem Detektor könnte es sich beispielsweise um einen Photomultiplier handeln, die Verwendung einer Photodiode, insbesondere einer Avalanche-Photodiode, wäre ebenfalls denkbar. Aufgrund der relativen Positionsänderung des spektral zerlegten Lichtstrahls und der Detektionsvorrichtung kann in vorteilhafter Weise auf den Einsatz mehrerer Detektoren verzichtet werden, was die Herstellungskosten ganz erheblich reduziert. Letztendlich werden nicht nur zwei, drei oder vier Detektoren eingespart, sondern auch deren zum Teil aufwendige Stromversorgung sowie Auslesevorrichtungen mit der entsprechenden Peripherie. Darüber hinaus entfällt des weiteren die komplizierte räumliche Anordnung mehrerer Detektoren samt deren Mittel zum Selektieren des vorgebbaren spektralen Bereichs, so dass in weiterer vorteilhafter Weise die Produktion erheblich vereinfacht wird.

Die erfindungsgemäße relative Positionsänderung zwischen dem spektral zerlegten Lichtstrahl und der Detektionsvorrichtung bewirkt eine Veränderung der Anfangs- und/oder Endwellenlänge des spektral selektierten Bereichs. Wenn beispielsweise der spektral zerlegte Lichtstrahl relativ zur Detektionsvorrichtung lateral verschoben wird, so "sieht" der Detektor nach dieser Verschiebung einen spektralen Bereich, der eine andere Anfangs- und Endwellenlänge aufweist. Wenn die Dispersionseigenschaft des Mittels zur spektralen Zerlegung kleiner ist, bleibt in diesem Beispiel die Breite des zu detektierenden spektralen Bereichs unverändert, da die Lage der Mittel zum Selektieren des vorgebbaren spektralen Bereichs relativ zum Detektor nicht verändert wurden. Es gibt nun mehrere Möglichkeiten, die relative Positionsänderung zwischen dem spektral zerlegten Lichtstrahl und der Detektionsvorrichtung durchzuführen.

In einer ersten Ausführungsform wird zur relativen Positionsänderung mindestens ein im Strahlengang angeordnetes optisches Bauteil gedreht oder verschoben. Bei dem optischen Bauteil handelt es sich vorzugsweise um einen Spiegel. Das Drehen eines im optischen Strahlengang angeordneten Spiegels könnte das zu detektierende Lichtbündel in der Pupille einer das Lichtbündel kollimierenden Linse verkippen. Der sich drehende Spiegel müßte im Detektionsstrahlengang der kollimierenden Linse vorgeordnet sein. Das gedrehte oder verschobene optische Bauteil ist im Detektionsstrahlengang vor dem Mittel zur spektralen Zerlegung angeordnet. Das Verkippen des Lichtbündels in der Pupille der kollimierenden Linse bewirkt eine laterale Verschiebung des auf die Detektionsvorrichtung auftreffenden spektral zerlegten Lichtstrahls.

In einer alternativen Ausführungsform erfolgt die relative Positionsänderung zwischen dem spektral zerlegten Lichtstrahl und der Detektionsvorrichtung durch Drehen oder Verschieben des Mittels zur spektralen Zerlegung. Auch hierdurch kann der spektral zerlegte Lichtstrahl relativ zur Detektionsvorrichtung verschoben bzw. verändert werden.

Das optische Bauteil bzw. das Mittel zur spektralen Zerlegung könnte auch gedreht und verschoben werden. Hierdurch ergibt sich dann - abhängig von der Anordnung der Drehachse und der Ausgestaltung der Verschiebung - eine Verkippung des optischen Bauteils bzw. des Mittels zur spektralen Zerlegung.

Die Drehung des Mittels zur spektralen Zerlegung sowie des obengenannten optischen Bauteils könnte unter Verwendung eines Galvanometers erfolgen. Das zu drehende Bauteil könnte direkt an das Galvanometer gekoppelt sein. Vorzugsweise ist es auf dessen mechanischer Drehachse befestigt. Alternativ hierzu könnte die Drehung der zu drehenden Bauteile durch den Einsatz von Piezoelementen erfolgen. Diese Drehung könnte über einen mechanischen Hebel bewirkt werden, wobei der Hebel beispielsweise relativ zur Drehachse radial verläuft und das Piezoelement zwischen einem ortsfesten Gehäuseteil und dem mechanischen Hebel wirkt. Hierbei ist eine Drehung des Bauteils in die beiden entgegengesetzten Drehrichtungen forderlich, wobei der mechanische Hebel mit dem Piezoelement derart gekoppelt ist, dass das Piezoelement den Hebel sowohl drücken als auch ziehen kann.

In einer weiteren Ausführungsform ist vorgesehen, dass die relative Positionsänderung zwischen dem spektral zerlegten Lichtstrahl und der Detektionsvorrichtung durch eine Relativbewegung der Detektionsvorrichtung erfolgt. Hierbei kann die Relativbewegung der Detektionsvorrichtung entweder gradlinig oder auf einem Bogen erfolgen. Im Allgemeinen werden die Mittel zum Selektieren des vorgebbaren spektralen Bereichs - also beispielsweise die Spaltblendenanordnung - mitsamt dem Detektor bewegt. Die Detektionsvorrichtung umfasst in diesem Fall die Mittel zum Selektieren des vorgebbaren Bereichs und den Detektor. Falls die Relativbewegung über eine Strecke erfolgt, die kleiner als die nutzbare Ausdehnung des Detektors ist, könnten in vorteilhafter Weise auch lediglich die Mittel zum Selektieren des vorgebbaren spektralen Bereichs bewegt werden.

In einer besonders vorteilhafter Weise erfolgt die relative Positionsänderung zwischen dem spektral zerlegten Lichtstrahl und der Detektionsvorrichtung durch eine kombinierte Winkel-/Lageänderung mindestens zweier optischer Bauteile. Durch die kombinierte bzw. simultane Positionsänderung, beispielsweise eines sich drehenden Spiegels mit der Relativbewegung der Detektionsvorrichtung, ist eine beschleunigte Detektion bei veränderter spektraler Detektionseinstellung möglich. So könnten kombiniert ein im Strahlengang angeordnetes optisches Bauteil sowie das Mittel zum spektralen Zerlegen und die Detektionsvorrichtung jeweils eine Winkel- und/oder Lageänderung durchführen, wobei die Frequenzen der jeweiligen Winkel-/Lageänderung in fester Beziehung zueinander stehen können. Beispielsweise dreht das zweite Bauteil mit der doppelten Frequenz des ersten Bauteils und die Detektionsvorrichtung wird mit einer dreifachen Frequenz der Drehbewegung des ersten Bauteils bewegt.

Als Mittel zur spektralen Zerlegung ist ein Prisma, ein Reflexions- oder eine Transmissionsgitter vorgesehen. Die Verwendung eines Prismas zur spektralen Zerlegung hat den Vorteil, dass die Streulichtanteile bei einem Prisma verglichen zu einem Gitter geringer sind, so dass ein Prisma zur spektralen Zerlegung für die erfindungsgemäße Anordnung bevorzugt wird. Ein Reflexions- oder Transmissionsgitter wäre dann zu bevorzugen, wenn die Streulichtanteile detektorseitig eine untergeordnete Rolle spielen, jedoch das Mittel zur spektralen Zerlegung - also das Gitter - aufgrund der geringeren Masse mit einer hohen Frequenz gedreht bzw. verschoben werden soll.

In einer besonders bevorzugten Ausführungsform ist die relative Positionsänderung zwischen dem spektral zerlegten Lichtstrahl und der Detektionsvorrichtung mit dem Rastervorgang des konfokalen Rastermikroskops synchronisierbar. Hierdurch kann die spektrale Detektion in Anhängigkeit der jeweiligen Rasterposition des konfokalen Rastermikroskops während des Scanvorgangs verändert werden, wodurch in besonders vorteilhafter Weise für jeden Objektpunkt beispielsweise die spektrale Verteilung des von dem Objektpunkt emittierten Fluoreszenzlichts detektiert werden kann.

In einer konkreten Ausführungsform ist vorgesehen, dass mit dem konfokalen Rastermikroskop ein Objektausschnitt bei verschiedenen spektralen Detektionseinstellungen wiederholt solange jeweils abgerastert wird, bis der gesamte zu detektierende Spektralbereich detektiert ist. Erst dann wird ein nächster Objektausschnitt abgerastert. Ein Objektausschnitt könnte ein Punkt, eine Linie, eine Gerade, eine Fläche oder ein dreidimensionaler Bereich sein. Beispielsweise könnte eine Linienrasterung derart ausgestaltet sein, dass der spektrale Detektionsbereich eine Breite von 5 nm aufweist. Der für die Detektion insgesamt verfügbare Spektralbereich verläuft von 500 nm bis 800 nm. Der vorgebbare spektrale Detektionsbereich wird nun zu Beginn der Linienrasterung derart eingestellt, dass der Detektor den spektralen Bereich von 500 nm bis 505 nm detektiert. Nachdem die abzurasternde Linie das Objekt ein erstes Mal abgerastert hat, wird durch die relative Positionsänderung des spektral zerlegten Lichtstrahls und der Detektionsvorrichtung ein zu detektierender spektraler Bereich von 505 nm bis 510 nm eingestellt, der von dem Detektor detektiert wird. Es ist vorgesehen, dass die gleiche Linie des Objekts so oft abgerastert wird, bis das Detektionslicht des vorgegebenen spektralen Bereichs von 5 nm lückenlos bis zu der höchsten zu detektierenden Wellenlänge von 800 nm detektiert wurde. Diese Vorgehensweise ist auch bei einer beliebig ausgeformten oder gekrümmten Linie eines Objekts denkbar. Hinsichtlich der Fläche ist ein Rechteck oder ein beliebig begrenztes zweidimensionales Gebiet vorgesehen.

Die Synchronisation der relativen Positionsänderung zwischen dem spektral zerlegten Lichtstrahl und der Detektionsvorrichtung mit dem Rastervorgang des konfokalen Rastermikroskops umfasst in vorteilhafter Weise auch die Wahl der in das Rastermikroskop einzukoppelnden Lichtwellenlänge. Beispielsweise ist es bei der konfokalen Fluoreszenz-Rastermikroskopie denkbar, dass während der oben beschriebenen Linienrasterung passend zu dem jeweilig eingestellten spektralen Detektionsbereich Licht der entsprechenden Anregungswellenlänge des für diesen spektralen Detektionsbereich in Frage kommenden Fluoreszenzfarbstoffs in das Rastermikroskop eingekoppelt wird. Die Einkopplung des Lichts der entsprechenden Wellenlänge erfolgt hierbei mit einem akusto-optischen Bauteil, beispielsweise einem AOTF (Acousto-Optical-Tunable-Filter) oder einem AOBS (Acousto-Optical-Beam-Splitter), wie es beispielsweise aus der DE 199 06 757 bekannt ist. Mit einem AOTF bzw. AOBS ist es möglich, Licht einer bestimmten Wellenlänge selektiv in das konfokale Rastermikroskop einzukoppeln, wobei auch Licht mehrerer Wellenlängen simultan einkoppelbar sind und die Lichtleistung des Lichts der jeweiligen Wellenlänge mit dem AOTF bzw. AOBS regelbar ist.

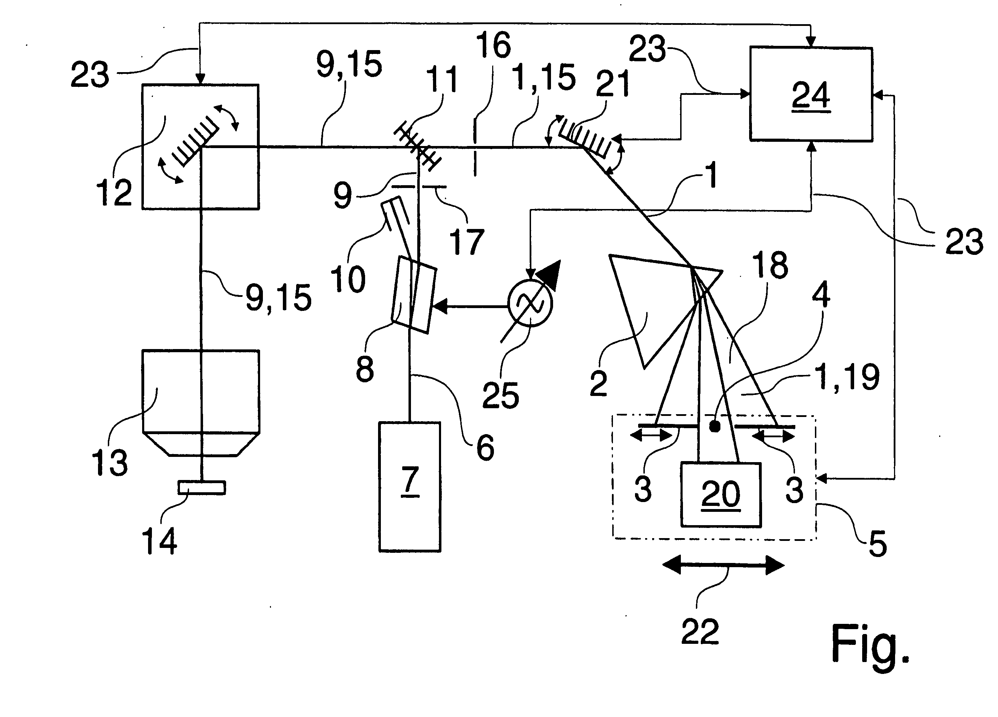

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung des bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt
- Fig.: eine schematische Darstellung eines Ausführungsbeispiels der erfindungsgemäßen optischen Anordnung.

Die Fig. zeigt eine optische Anordnung zur Selektion und Detektion des Spektralbereichs eines Lichtstrahls 1 in einem konfokalen Rastermikroskop, mit einem Mittel 2 zur spektralen Zerlegung des Lichtstrahls 1, mit Mitteln 3 zum Selektieren eines vorgebbaren spektralen Bereichs 4 und mit einer Detektionsvorrichtung 5.

Bei dem in der Fig. gezeigten konfokalen Rastermikroskop wird Laserlicht 6 der Laserlichtquelle 7 mit Hilfe eines AOTF's 8 in den Beleuchtungestrahlengang 9 des konfokalen Rastermikroskops eingekoppelt. Das nicht eingekoppelte Laserlicht wird von der Strahlfalle 10 absorbiert. Das eingekoppelte Laserlicht 9 wird an dem dichroitischen Strahlteiler 11 zur Strahlablenkeinrichtung 12 reflektiert, bei der das Beleuchtungslicht 9 in zwei im wesentlichen senkrecht zueinander stehenden Richtungen abgelenkt wird. Das Beleuchtungslicht durchläuft die Mikroskopoptik 13 und beleuchtet das schematisch gezeichnete Fluoreszenzobjekt 14. Das vom Fluoreszenzobjekt 14 emittierte Fluoreszenzlicht 15 durchläuft den Strahlengang in umgekehrter Reihenfolge bis zum dichroitischen Strahlteiler 11.

Nach dem Passieren des Detektionspinholes 16, das in einer zur Ebene des Anregungspinholes 17 korrespondierenden Fokusebene angeordnet ist, wird das Fluoreszenzlicht 15 bzw. 1 zur weiteren Detektion von der erfindungsgemäßen optischen Anordnung weiterverarbeitet.

Erfindungsgemäß sind zur Beeinflussung des zu detektierenden spektralen Bereichs 4, 18 der spektral zerlegte Lichtstrahl 19 und die Detektionsvorrichtung 5 relativ zueinander in ihrer Position veränderbar. Die Detektionsvorrichtung 5 umfasst einen einzigen Detektor 20.

Die relative Positionsänderung zwischen dem spektral zerlegten Lichtstrahl 19 und der Detektionsvorrichtung 5 bewirkt eine Veränderung der Anfangs- und/oder Endwellenlänge des spektral selektierten Bereichs 4. Die relative Positionsänderung erfolgt durch Drehen des im Detektionsstrahlengang 15 angeordneten Spiegels 21. Der Spiegel 21 ist vor dem Mittel 2 zur spektralen Zerlegung angeordnet. Die Drehung des Spiegels 21 erfolgt um die senkrecht zur Zeichenebene verlaufende Drehachse 26.

Zur relativen Positionsänderung zwischen dem spektral zerlegten Lichtstrahl 19 und der Detektionsvorrichtung 5 ist weiterhin eine Relativbewegung der Detektionsvorrichtung 5 vorgesehen. Die Detektionsvorrichtung 5 wird entlang der Richtung 22 geradlinig bewegt. Somit werden der Detektor 5 und die Mittel 3 zum Selektieren des vorgebbaren Bereichs 4 gemeinsam verschoben.

In diesem Ausführungsbeispiel werden also zwei optische Bauteile, der Spiegel 21 und die Detektionsvorrichtung 5, einer kombinierten Winkel- und Lageänderung unterzogen. Hierbei erfolgt die Bewegung der Detektionsvorrichtung 5 verglichen zur Drehbewegung des Spiegels 21 langsam.

Zur spektralen Zerlegung des Lichtstrahls 15 dient ein Prisma 2.

Mit Hilfe den Verbindungen 23 ist die relative Positionsänderung zwischen dem spektral zerlegten Lichtstahl 19 und der Detektionsvorrichtung 5 mit dem Rastervorgang des konfokalen Rastermikroskops synchronisierbar. Die aktuelle Position der Strahlablenkeinrichtung 12 wird über die Synchronisationsverbindung 23 dem Steuerrechner 24 des konfokalen Rastermikroskops übergeben, der in Abhängigkeit der aktuellen Strahlposition der Strahlablenkvorrichtung 12 den Spiegel 21 sowie die Detektionsvorrichtung 5 bewegt. Der Steuerrechner 24 des konfokalen Rastermikroskops ist ebenfalls über eine Verbindung 23 mit der Steuervorrichtung 25 des AOTF's 8 verbunden, so dass die Wahl der in das Rastermikroskop einzukoppelnden Lichtwellenlänge ebenfalls synchron zur relativen Positionsänderung zwischen dem spektral zerlegten Lichtstrahl 19 und der Detektionsvorrichtung 5 möglicht ist.

Abschließend sei ganz besonders darauf hingewiesen, dass das voranstehend örterte Ausführungsbeispiel lediglich zur Beschreibung der beanspruchten Lehre dient, diese jedoch nicht auf das Ausführungsbeispiel einschränkt.

## Patentansprüche

1. Konfokales Rastermikroskop mit einer optischen Anordnung zur Selektion und Detektion des Lichts eines Spektralbereichs eines Lichtstrahls (1), wobei die optische Anordnung Mittel (2) zur spektralen Zerlegung des Lichtstrahls (1), Mittel (3) zum Selektieren eines vorgebbaren spektralen Bereichs (4) und eine Detektionsvorrichtung (5) umfasst und wobei zur Beeinflussung des zu detektierenden spektralen Bereichs (4, 18) der spektral zerlegte Lichtstrahl (19) und die Detektionsvorrichtung (5) relativ zueinander in ihrer Position veränderbar sind, **dadurch gekennzeichnet, dass** die relative Positionsänderung zwischen dem spektral zerlegten Lichtstrahl (19) und der Detektionsvorrichtung (5) durch eine Winkeländerung eines im Strahlengang vor einem Prisma oder Reflektionsgitter oder Transmissionsgitter angeordneten Spiegels (21) und einer simultanen lageänderung der Detektions vorrichtung (5) erfolgt.

2. Rastermikroskop nach Anspruch 1, **dadurch gekennzeichnet, dass** das Prisma oder Reflektionsgitter oder Transmissionsgitter winkel veränderbar ist.

3. Rastermikroskop nach Anspruch 1 oder 2, **dadurch gekennzeichnet, dass** die Detektionsvorrichtung (5) nur einen Detektor (20) umfasst.

4. Rastermikroskop nach einem der Anspruch 1 bis 3, **dadurch gekennzeichnet, dass** die relative Positionsänderung zwischen dem spektral zerlegten Lichtstrahl (19) und der Detektionsvorrichtung (5) eine Veränderung der Anfangs- und/oder Endwellenlänge des spektral selektierten Bereichs (4) bewirkt.

5. Rastermikroskop nach einem der Ansprüche 1 bis 4, **dadurch gekennzeichnet, dass** die relative Positionsänderung zwischen dem spektral zerlegten Lichtstrahl (19) und der Detektionsvorrichtung (5) durch Drehen und/oder Verschieben mindestens eines im Strahlengang (15) angeordneten optischen Bauteils, vorzugsweise eines Spiegels (21), erfolgt, wobei das optische Bauteil (21) vor dem Mittel (2) zur spektralen Zerlegung angeordnet sein kann.

6. Rastermikroskop nach einem der Ansprüche 1 bis 5, **dadurch gekennzeichnet, dass** die relative Positionsänderung zwischen dem spektral zerlegten Lichtstrahl (19) und der Detektionsvorrichtung (5) durch Drehen und/oder Verschieben des Mittels (2) zur spektralen Zerlegung erfolgt.

7. Rastermikroskop nach Anspruch 5 oder 6, **dadurch gekennzeichnet, dass** die Drehung unter Verwendung eines Galvanometers erfolgt, wobei das zu drehende Bauteil (21, 2) direkt an dem Galvanometer, vorzugsweise auf dessen mechanischer Drehachse befestigt, gekoppelt sein kann.

8. Rastermikroskop nach Anspruch 5 oder 6, **dadurch gekennzeichnet, dass** die Drehung durch den Einsatz von Piezoelementen erfolgt, wobei ein Piezoelement die Drehung über einen mechanischen Hebel bewirken kann.

9. Rastermikroskop nach einem der Ansprüche 1 bis 8, **dadurch gekennzeichnet, dass** die relative Positionsänderung zwischen dem spektral zerlegten Lichtstrahl (19) und der Detektionsvorrichtung (5) durch eine Relativbewegung der Detektionsvorrichtung (5) erfolgt, wobei die Relativbewegung der Detektionsvorrichtung (5) geradlinig oder auf einem Bogen verlaufen kann.

10. Rastermikroskop nach einem der Ansprüche 1 bis 9, **dadurch gekennzeichnet, dass** als Mittel (2) zur spektralen Zerlegung ein Prisma, ein Reflexions- oder ein Transmissionsgitter dient.

11. Rastermikroskop nach einem der Ansprüche 1 bis 10, **dadurch gekennzeichnet, dass** die relative Positionsänderung zwischen dem spektral zerlegten Lichtstrahl (19) und der Detektionsvorrichtung (5) mit dem Rastervorgang des konfokalen Rastermikroskops synchronisierbar ist.

12. Rastermikroskop nach Anspruch 11, **dadurch gekennzeichnet, dass** mit dem konfokalen Rastermikroskop ein Objektausschnitt bei verschiedenen spektralen Detektionseinstellungen wiederholt solange jeweils abgerastert wird, bis der gesamte zu detektierende Spektralbereich detektiert ist, bevor ein nächster Objektausschnitt abgerastert wird, wobei der Objektausschnitt ein Punkt, eine Linie, eine Gerade, eine Fläche oder ein dreidimensionaler Bereich sein kann.

13. Rastermikroskop nach Anspruch 11 oder 12, **dadurch gekennzeichnet, dass** die Synchronisation auch die Wahl der in das Rastermikroskop einzukoppelnden Lichtwellenlänge umfasst, wobei die Wahl der einzukoppelnden Lichtwellenlänge mit einem akusto-optischen Bauteil, insbesondere einem AOTF (8) (Acousto-Optical-Tunable-Filter) oder einem AOBS (Acousto-Optical-Beam-Splitter) erfolgen kann.

## Claims

1. Confocal raster microscope having an optical arrangement for selecting and detecting the light of a spectral range of a light beam (1), the optical arrangement comprising means (2) for spectrally splitting the light beam (1), means (3) for selecting a predeterminable spectral range (4) and a detection device (5), and the spectrally split light beam (19) and the detection device (5) being positionally adjustable relative to each other in order to influence the spectral range (4, 18) to be detected, **characterised in that** the relative positional adjustment between the spectrally split light beam (19) and the detection device (5) is effected by an angular adjustment of a mirror (21) which is arranged in the beam path before a prism or reflection grating or transmission grating and a simultaneous positional adjustment of the detection device (5).

2. Raster microscope according to claim 1, **characterised in that** the prism or reflection grating or transmission grating is angularly adjustable.

3. Raster microscope according to claim 1 or 2, **characterised in that** the detection device (5) comprises only a detector (20).

4. Raster microscope according to any one of claims 1 to 3, **characterised in that** the relative positional adjustment between the spectrally split light beam (19) and the detection device (5) brings about a change in the initial and/or final wavelength of the spectrally selected range (4).

5. Raster microscope according to any one of claims 1 to 4, **characterised in that** the relative positional adjustment between the spectrally split light beam (19) and the detection device (5) is brought about by rotation and/or displacement of at least one optical component, preferably a mirror (21), which is arranged in the beam path (15), the optical component (21) being able to be arranged in front of the spectral splitting means (2).

6. Raster microscope according to any one of claims 1 to 5, **characterised in that** the relative positional adjustment between the spectrally split light beam (19) and the detection device (5) is effected by rotation and/or displacement of the spectral splitting means (2).

7. Raster microscope according to claim 5 or 6, **characterised in that** the rotation is effected by a galvanometer, the component (21, 2) to be rotated being able to be coupled directly to the galvanometer, preferably secured to the mechanical axis of rotation thereof.

8. Raster microscope according to claim 5 or 6, **characterised in that** the rotation is effected by using piezoelectric elements, a piezoelectric element being able to bring about the rotation by means of a mechanical lever.

9. Raster microscope according to any one of claims 1 to 8, **characterised in that** the relative positional adjustment between the spectrally split light beam (19) and the detection device (5) is effected by a relative movement of the detection device (5), the relative movement of the detection device (5) being able to extend in a straight line or along a curve.

10. Raster microscope according to any one of claims 1 to 9, **characterised in that** a prism, a reflection grating or a transmission grating is used as the spectral splitting means (2).

11. Raster microscope according to any one of claims 1 to 10, **characterised in that** the relative positional adjustment between the spectrally split light beam (19) and the detection device (5) can be synchronised with the raster operation of the confocal raster microscope.

12. Raster microscope according to claim 11, **characterised in that** an object segment is repeatedly raster-scanned with the confocal raster microscope at various spectral detection positions until the entire spectral range to be detected has been detected, before the next object segment is raster-scanned, the object segment being able to be a point, line, straight line, surface-area or a three-dimensional region.

13. Raster microscope according to claim 11 or 12, **characterised in that** the synchronisation also comprises the selection of the light wavelength which is to be coupled to the raster microscope, the selection of the light wavelength to be coupled being able to be carried out by means of an acoustic/optical component, in particular an AOTF (8) (acoustic/optical tunable filter) or an AOBS (acoustic/optical beam splitter).

## Revendications

1. Microscope confocal à balayage avec une structure optique pour la sélection et la détection de la lumière d'un domaine spectral d'un rayon lumineux (1), la structure optique comprenant des moyens (2) pour la décomposition spectrale du rayon lumineux (1), des moyens (3) pour la sélection d'un domaine spectral (4) prédéfinissable et un dispositif de détection (5), et le rayon lumineux (19) décomposé spectralement et le dispositif de détection (5) étant modifiables dans leur position relativement l'un à l'autre pour l'influence du domaine spectral (4,18) à détecter,
**caractérisé par le fait que** la modification de position relative entre le rayon lumineux (19) décomposé spectralement et le dispositif de détection (5) est effectuée par une modification d'angle d'un miroir (21) disposé dans la marche des rayons avant un prisme ou une grille de réflexion ou une grille de transmission et une modification de position simultanée du dispositif de détection (5).

2. Microscope à balayage selon la revendication 1,
**caractérisé par le fait que** le prisme ou la grille de réflexion ou la grille de transmission est modifiable en angle.

3. Microscope à balayage selon la revendication 1 ou 2,
**caractérisé par le fait que** le dispositif de détection (5) ne comprend qu'un détecteur (20).

4. Microscope à balayage selon l'une des revendications 1 à 3,
**caractérisé par le fait que** la modification de position relative entre le rayon lumineux (19) décomposé spectralement et le dispositif de détection (5) produit une modification de la longueur d'onde initiale et/ou finale du domaine spectral (4) sélectionné.

5. Microscope à balayage selon l'une des revendications 1 à 4,
**caractérisé par le fait que** la modification de position relative entre le rayon lumineux (19) décomposé spectralement et le dispositif de détection (5) est effectuée par rotation et/ou coulissement d'au moins un composant optique disposé dans la marche des rayons (15), de préférence un miroir (21), le composant optique (21) pouvant être disposé avant les moyens (2) pour la décomposition spectrale.

6. Microscope à balayage selon l'une des revendications 1 à 5,
**caractérisé par le fait que** la modification de position relative entre le rayon lumineux (19) décomposé spectralement et le dispositif de détection (5) est effectuée par rotation et/ou coulissement des moyens (2) pour la décomposition spectrale.

7. Microscope à balayage selon la revendication 5 ou 6,
**caractérisé par le fait que** la rotation est effectuée en utilisant un galvanomètre, le composant (21, 2) à faire tourner pouvant être accouplé directement au galvanomètre, de préférence fixé sur son axe de rotation mécanique.

8. Microscope à balayage selon la revendication 5 ou 6,
**caractérisé par le fait que** la rotation est effectuée par l'utilisation de piézo-éléments, un piézo-élément pouvant accomplir la rotation par l'intermédiaire d'un levier mécanique.

9. Microscope à balayage selon l'une des revendications 1 à 8,
**caractérisé par le fait que** la modification de position relative entre le rayon lumineux (19) décomposé spectralement et le dispositif de détection (5) est effectuée par un déplacement relatif du dispositif de détection (5), le déplacement relatif du dispositif de détection (5) pouvant se dérouler linéairement ou sur un arc.

10. Microscope à balayage selon l'une des revendications 1 à 9,
**caractérisé par le fait qu'**un prisme, une grille de réflexion ou une grille de transmission sert de moyens (2) pour la décomposition spectrale.

11. Microscope à balayage selon l'une des revendications 1 à 10,
**caractérisé par le fait que** la modification de position relative entre le rayon lumineux (19) décomposé spectralement et le dispositif de détection (5) peut être synchronisée avec le processus de balayage du microscope confocal à balayage.

12. Microscope à balayage selon la revendication 11,
**caractérisé par le fait que**, avec le microscope confocal à balayage, un secteur d'objet est balayé respectivement de manière répétée à diverses mises au point spectrales de détection jusqu'à ce que la totalité du domaine spectral soit détectée, le secteur d'objet pouvant être un point, une ligne, une droite, une surface ou une zone tridimensionnelle.

13. Microscope à balayage selon la revendication 11 ou 12,
**caractérisé par le fait que** la synchronisation comprend également le choix de la longueur d'onde lumineuse à moduler dans le microscope à balayage, le choix de la longueur d'onde lumineuse à moduler pouvant être effectué par un composant acousto-optique, en particulier un AOTF (8) (Acousto-Optical-Tunable-Filter) ou un AOBS (Acousto-Optical-Bearn-Splitter).
